# EUROPEAN PATENT SPECIFICATION

(11) **EP 4 260 680 B1**
(45) Date of publication and mention of the grant of the patent: **07.10.2026**
(21) Application number: 23155815.6
(22) Date of filing: 09.02.2023
(51) Int. Cl.: A01F 15/07, A01F 15/10, B65B 11/04

(54) **AGRICULTURAL BALER**
LANDWIRTSCHAFTLICHE BALLENPRESSE
PRESSE À BALLES AGRICOLE

(30) Priority: 28.02.2022 GB 202202703
(43) Date of publication of application: 18.10.2023
(73) Proprietor: AGCO International GmbH, 8212 Neuhausen am Rheinfall (CH)
(72) Inventor: SCHLICHTING, Malte Cornelius, 38304 Wolfenbüttel (DE)
(74) Representative: AGCO Intellectual Property Department

(56) References cited:
- EP-B1- 2 611 280
- FR-B1- 2 806 251
- US-A1- 2017 287 303
- US-B1- 11 205 337
- US-B1- 8 776 679
- US-B2- 10 926 908

## Description

### CROSS-REFERENCE TO RELATED APPLICATIONS

### FIELD

The present invention relates to an agricultural round baler, and in particular to improvements in the apparatus for binding of formed round bales within a baling chamber of the agricultural round baler.

### BACKGROUND

It is known to provide a reservoir of a binding material to bind or wrap a formed bale within an agricultural baler. It is also generally desirable to trace the origin of bales produced by an agricultural baler. To this end, it is known to provide a binding or wrapping material with RFID tags or other electronic identifiers. Typical binding materials include baler twine, typically for balers producing square bales and film or net wrapping for binding or wrapping round bales within a baling chamber of round baler prior to ejection of the formed bale from the baling chamber.

It is known for example from US 10 926 908 B2 (Forage Innovations BV) to add electronic tags such as RFID tags to a web of wrapping material as the wrapping material is deployed from a wrapping material reservoir and prior to the wrapping material being introduced to a baling chamber of an agricultural baler. A first tag reader is arranged to be able to read a tag prior to insertion of the wrapping material into the baling chamber and a second tag reader is arranged to be able to read a tag once the wrapping material has entered the baling chamber. These tag readers are provided for detecting of malfunctions in the delivery of the wrapping material into the baling chamber and so enable an operator to be informed of such a malfunction and to take appropriate action.

In known agricultural balers, each bale may have multiple electronic identifiers with unique serial numbers, such that a unique identifier is associated with each formed bale. Information about the bale can also be associated with the electronic identifier, either directly by storing the information on the electronic identifiers or indirectly by associating each unique identifier with the information in a database. Such a database can be stored and accessed from any suitable location such as cloud storage or other memory storage. Example information may include, but is not limited to, bale weight, moisture content, geographical location from which the harvested crop was baled, time of baling, number of knives used in processing the harvested crop, kind of wrapping material used.

Typically, the electronic identifiers are incorporated in the binding material during manufacture at a fixed distance from one another, typically every 6 meters along the length of the wrapping material.

Given the reliance upon the information associated with each bale, it is important that the identifiers do not become damaged during the baling operation. One potential source of such damage is the severing apparatus, and in particular a severing knife or blade, used to sever the binding material being wrapped around the formed bale from the wrapping material being dispensed from the reservoir of wrapping material.

It is an advantage of the present invention that the problem of inadvertent damage to the electronic identifier by the severing apparatus is addressed.

### BRIEF SUMMARY

According to a first aspect of the present invention, a control system for controlling a cutting operation performed by one or more operational components of an agricultural baler on a wrapping material incorporating a plurality of electronic identifiers, the control system comprising one or more controllers, and being configured to:
receive data indicative of a position of a first electronic identifier;
receive data indicative of the distance between adjacent electronic identifiers;
characterised in that the control system is further configured to determine, in dependence on the position of at least a first electronic identifier and the distance between adjacent electronic identifiers, a cutting strategy for performing the cutting operation to avoid severing of the wrapping material in the region of an electronic identifier; and
generate and output one or more control signals for controlling one or more operational components associated with the baler in dependence on the determined cutting strategy.

Preferably the cutting strategy comprises one of:
increasing the number of preset wrapping material layers; or
decreasing the number of preset wrapping material layers; or
neither increasing or decreasing the number of preset wrapping material layers.

Preferably, the one or more operational components comprises a user interface operable to communicate information indicative of the determined cutting strategy to an operator of the agricultural baler. More preferably, the control system is configured to generate and output the one or more control signals for controlling operation of the user interface to communicate the information indicative of the determined cutting strategy to an operator of the agricultural baler.

Preferably, the one or more operational components further comprises a severing apparatus for operation in accordance with the determined cutting strategy. More preferably, the control system is configured to generate and output the one or more control signals for automatically controlling the severing apparatus to sever the wrapping material during a baling operation.

Preferably, the control system is configured to:
receive position data from an electronic identification system associated with the agricultural baler; and
determine a cutting strategy in dependence thereon.

More preferably the electronic identification system comprises a reader of the electronic identifier.

Preferably, the electronic identification system is mounted or otherwise coupled to the agricultural baler and configured to monitor electronic identifiers passing into a baling chamber of the agricultural baler.

Preferably, the control system is configured to receive a user input indicative of a position of a first electronic identifier provided by an operator of the agricultural baler and determine the cutting strategy in dependence thereon.

According to a second aspect a system for controlling a cutting operation performed by one or more controllable components of an agricultural baler on a wrapping material, comprises:
a severing apparatus for severing wrapping material passing into a baling chamber of an agricultural baler; and
a control system according to the first aspect configured to control operation of the severing apparatus and/or the wrapping apparatus in accordance with a determined cutting strategy to avoid severing of the wrapping material in the region of an electronic identifier.

According to third aspect, an agricultural baler comprises the control system of the first aspect, or comprises the system of the second aspect.

According to a fourth aspect, a method of controlling operation of one or more controllable components of an agricultural baler, comprises:
receiving data indicative of data indicative of a position of a first electronic identifier on a wrapping material incorporating a plurality of electronic identifiers;
determining, in dependence on the position of a first electronic identifier, a cutting strategy for performing a cutting operation to avoid severing of the wrapping material in the region of the electronic identifier; and
generating and outputting one or more control signals for controlling one or more operational components associated with the agricultural baler in dependence on the determined cutting strategy.

According to a fifth aspect a computer readable program comprises instructions which, when the program is executed by a computer, causes the baler of the third aspect to implement the method of the fourth aspect.

### BRIEF DESCRIPTION OF THE DRAWINGS

The invention will now be described, by way of example only, with reference to the accompanying drawings, in which:
FIG 1 shows a schematic side view of a round baler and a towing vehicle;
FIG 2 shows a schematic side view of elements of an agricultural baler for use with the present invention;
FIG 3 shows a free end of a length of a wrapping material;
FIG 4 shows a schematic diagram illustrating an embodiment of a control system in accordance with the invention;
FIG 5 shows a schematic diagram illustrating elements of the agricultural baler; and
FIG 6 shows a flow chart illustrating the method of the present invention.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments.

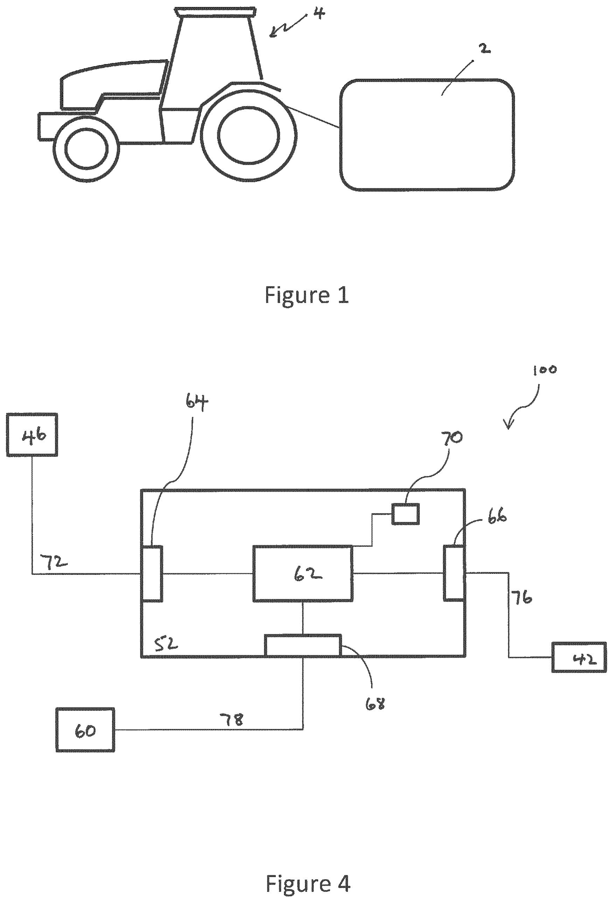

With reference to Figure 1, an agricultural baler 2 is shown connected to an agricultural towing vehicle 4, such as a tractor. Typically, the agricultural baler 2 is connected to a Power Take Off (PTO) of the towing vehicle 4 in order to drive operational elements of the agricultural baler 2. In a round baler for producing bales in a fixed diameter baling chamber, the baling chamber being largely defined by a plurality of suitably arranged roller, the PTO connection may be used to drive a number of the rollers forming part of the baling chamber. In a round baler 2 having a baling chamber of variable diameter, the PTO connection may be used to power driven rollers driving the endless belts forming the baling chamber. The towing vehicle 4 is also conveniently provided with a terminal having a user interface 60 by which information relevant to the operation of the towing vehicle 4 and the round baler 2 may be communicated to an operator within the towing vehicle 4.

Electrical power may be taken from the towing vehicle 4 or from a power source carried on the baler 2 and used to power operation of various operational elements of the baler 2.

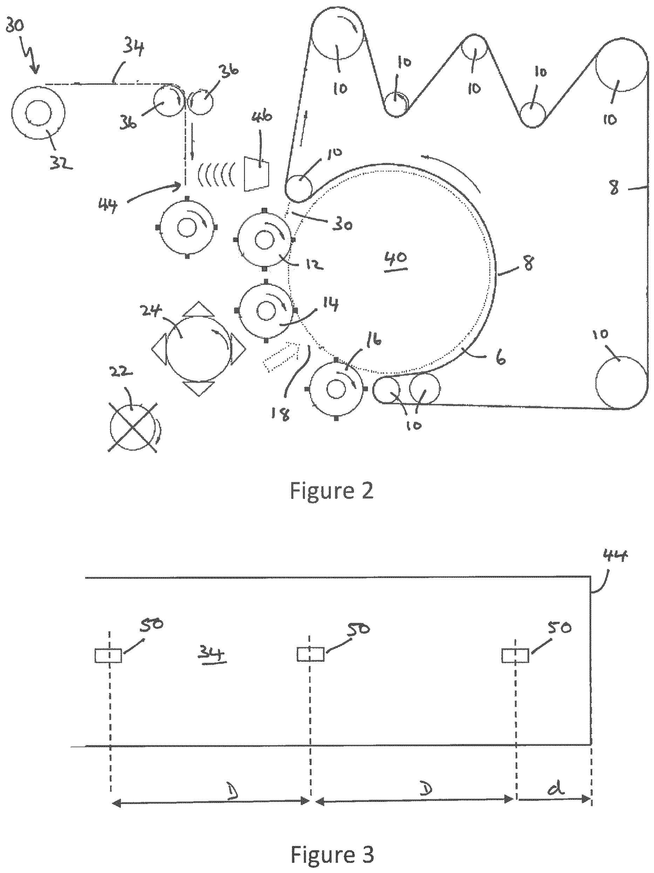

Aspects of an example variable chamber round baler are shown in Figure 2. A baling chamber 6 is defined in part by a series of endless belts 8 wound about a plurality of rollers 10. The rollers 10 comprise both driven and idler rollers, the position of some of the rollers being varied to control the size of the baling chamber 6. The baling chamber 6 is further defined by a pressing roller 12 and first and second starter rollers 14,16. A crop inlet 18 is defined between the first and second starter rollers 14,16 and a wrapping material inlet 30 is defined between the pressing roller 12 and the endless belts 8.

In use, as the baler 2 is towed along a windrow or swath of harvested crop, a rotating pick up unit 22 of the baler 2 gathers up harvested crop and directs the harvested crop to a rotating conveyor rotor 24, the conveyor rotor 24 directing the gathered crop through the crop inlet 18 into the baling chamber 6 of the round baler.

The baler 2 further includes a reservoir 30 in which at least one roll 32 of wrapping material 34 is located. While only a single roll of wrapping material is shown, the reservoir 30 may contain rolls of more than one kind of wrapping material to allow an operator to change out the wrapping material depending upon the harvested crop to baled as the operator moves between fields having different crops to be baled. In use, the wrapping material 34 extends from the reservoir to a feed apparatus.

In the illustrated embodiment, the feed apparatus comprises a pair of feed rollers 36 and a web supply roller 38.

When a bale 40 of suitable size has been formed in the baling chamber 6, the feed apparatus is actuated to feed a free end of the wrapping material 34 to the wrapping material inlet 20, from where the wrapping material 34 is drawn into the baling chamber 6 to wrap the formed bale 40. In the illustrated embodiment, the feed rollers are actuated to draw the wrapping material from the reservoir and into contact with the web supply roller 38. The web supply roller 38 is driven so as direct a free end of the wrapping material 34 toward the rotating pressing roller 12. The feed apparatus may also be arranged to keep the wrapping material under a desired tension as the wrapping material is drawn into the baling chamber. In the illustrated embodiment, this is achieved by controlling the speed of the feed rollers 36.

Once the formed bale has been sufficiently wrapped, a severing mechanism 42 is actuated to sever the wrapping material 34 such that a first free end 44 is created within the baler 2 (for wrapping or binding of the next formed bale) and a second free end is drawn into the baling chamber 6 to complete wrapping of the formed bale 40.

As best shown in Figure 3, the wrapping material 34 is provided with a plurality of electronic identifiers 50. The electronic identifiers 50 are regularly spaced a distance D from one another. An electronic identifier 50 is spaced a distance d from the free end 44 of the wrapping material 34.

The baler 22 is further provided with an electronic identification system in the form of a reader 46 for reading of the electronic identifiers 50 forming part of the wrapping material 34. The reader 46 is advantageously located adjacent a free portion of a path of the wrapping material 34. In this way the reader 46 is able to read and identify each electronic identifier 50, such as an RFID tag, as it passes the reader 46.

The baler 2 is typically provided a control unit 52. The control unit 52 may comprise one or more processors. The processor (or processors) may be located on the baler 2 and be in communication with one or more processors located elsewhere (for example on the towing vehicle 4 or remote from the baler/towing vehicle combination). The various processors may communicate with one another over a network 54 by any suitable means.

The control unit 52 is in communication with apparatus adapted to calculate the length of wrapping material 34 consumed from the reservoir. This information is used to ensure that a certain number of layers of wrapping material 34 are wrapped around the formed bale 40. Such apparatus may include apparatus to measure the number of rotations of the feed rollers 36, or as explained further below, the number of electronic identifiers 50 passing the reader 46.

Accidental damage to the electronic identifiers 50 may be avoided by the use of a suitable cutting strategy.

As shown in Figure 4, an example control system 100 comprises a control unit 52 having an electronic processor 62 associated with the baler 2, and electronic inputs 64 and electronic outputs 66,68. The processor 62 is operable to access a memory 70 associated with the control unit 52 and execute instructions stored therein to perform the steps and functionality of the present invention, e.g. by controlling the user interface 60, to indicate, e.g. to an operator of the baler 2, information indicative of the operation of the baler 2 including information regarding consumption of the wrapping material 34 and/or a degree of wrapping of the formed bale 40 in the baling chamber 6.

The control unit 52 is operable to receive sensor data via input 64 which, in the illustrated embodiment, takes the form of input signals 72 received from the reader 46. Utilising this data, the processor 62 is configured to analyse the data and determine therefrom information regarding the wrapping of the formed bale 40. In particular, this information is used to determine a cutting strategy for the baler 2.

As described above, the control unit 52 includes an electronic output 66 configured to output control signals 74 generated by the processor 62 for controlling operation of the severing apparatus 42. Specifically, processor 62 is operable to generate, and the control unit 52 operable to then output via output 68, control signals 76 for controlling operation of the severing apparatus 42 as determined by the cutting strategy. As will be appreciated, the control unit 52 may output the control signals 76 to a local processing unit, for controlling operation of the severing apparatus 42.

Output 68 is operably coupled to the user interface 60 of the baler 2. Here, the control system 100 is operable to control operation of the user interface 60, e.g. through output of control signals 78 in order to display data to an operator of the baler 2 relating to the operation of the control system 100. Specifically, the control system 100 is operable to control the user interface 60 to communicate to the operator an indicator of the cutting strategy, for example by displaying information regarding consumption of the wrapping material 34 and/or a degree of wrapping of the formed bale 40 in the baling chamber 6, and/or whether any adjustment to the degree of wrapping of the formed bale 40 has been required.

### Example 1

A fresh roll 32 of wrapping material 34 is loaded into the baler 2. Information about the distance d to the first electronic identifier 50 and the separation distance D of subsequent electronic identifiers 50 is known. For example, such information may be provided by the manufacturer of the wrapping material. The operator inputs this information into the system, for example by entering the information into the user terminal 60 in the tractor 4 or by entering the information into application software on a mobile telephone or similar apparatus.

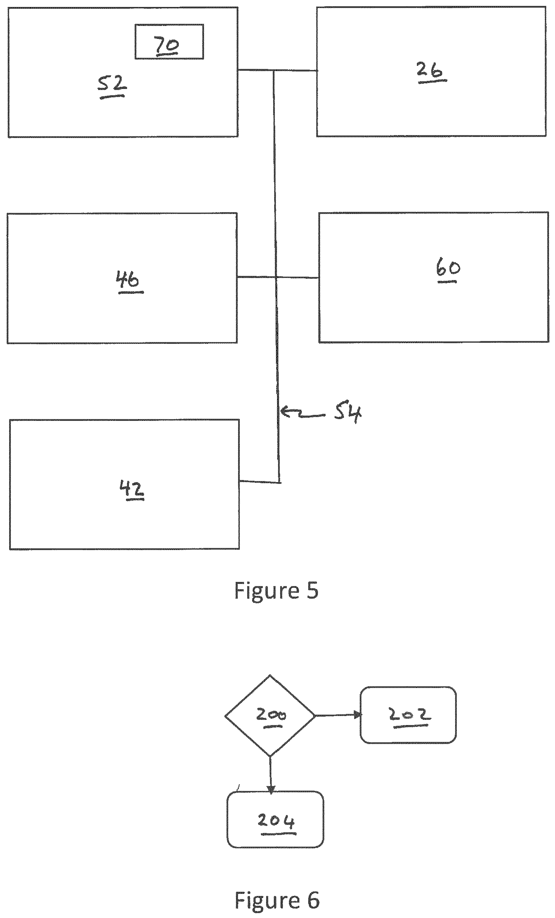

One of the processors then calculates, taking account of the diameter of the formed bale 40 in the baling chamber 6 and desired number of layers of wrapping material 34, whether on actuation of the severing apparatus 42 an electronic identifier 50 will be in the path of the severing apparatus (or within a predefined distance of the cut) (step 200, FIG 6). The processor 52 can then adjust the timing of the actuation of the severing apparatus 42 within a predetermined threshold to increase or decrease the number of layers of wrapping material 34 and so avoid severing of the wrapping material 34 in the region of the electronic identifier 50

(step 202). If no adjustment is required, the processor 52 actuates the severing apparatus 42 as intended (step 204)

### Example 2

When a new roll 34 of wrapping material 34 is loaded into the baler 2, neither the information about the distance d to the first electronic identifier nor the separation distance D of subsequent electronic identifiers 50 is known - or the operator fails to input this information. The reader 46 is adapted to read and note the appearance of each electronic identifier and supply this data to the processor 52 so that the separation distance D of electronic identifiers (given the speed of the wrapping material) can be calculated and this information then used to determine the length of wrapping material 34 entering the baling chamber 6 and so the degree of wrapping of the formed bale 40.

The processor 52 is also provided with the location of the severing zone (where along the path of the wrapping material 34 the wrapping material is cut), for example in relation to the position of the reader 46 or the position of the wrapping material inlet 20 and is able to calculate whether, when the severing apparatus 42 is actuated given the speed of the wrapping material 34 and the last signal indicative of an electronic identifier 50, an electronic identifier 50 will be in the path of the severing apparatus 42 (or within a predefined distance of the cut). The processor 52 can then adjust the actuation of the severing apparatus 42 within a predetermined threshold to increase or decrease the number of layers of wrapping material 34 and so avoid severing of the wrapping material 34 in the region of the electronic identifier 50.

### Example 3

A fresh roll of wrapping material 34 is loaded into the baler 2. As in Example 1, information about the distance to the first electronic identifier 50 and the separation distance D of subsequent electronic identifiers 50 is known. Instead of actuating the severing apparatus 42 based upon the total length of wrapping material 34 dispensed as in Example 1, the severing apparatus 42 is instead actuated based upon the known separation distance D of the electronic identifiers 50 and monitoring the number of such electronic identifiers 50 detected - this being proportionate to the number of layers of wrapping material to be applied to the formed bale 40. The processor 52 can then adjust the actuation of the severing apparatus 42 in order to sever the wrapping material 34 at a known interval from a reading of an electronic identifier 50 in order to avoid damage to a subsequent electronic identifier 50.

Reading of the electronic identifiers 50 in this way also allows the processor(s) 52 to calculate when the roll of wrapping material 34 will be exhausted and need replacement, for example by counting the electronic identifiers 50 and comparing to a known number of electronic identifiers 50 on a full roll 32 of wrapping material 34.

Further, should an operator need to swap between rolls of wrapping material, for example between a roll of netwrap and a roll of plastics film, due to a preference for a different kind of wrapping material when wrapping a formed bale of a different crop material, the processor(s) 52 can store the details of the last detected electronic identifier 50 for a partially consumed roll of wrapping material in an associated memory or display relevant details to an operator such that the operator can input these details if called upon at a later time. Such relevant details may include the number of electronic identifiers 50 and meterage of wrapping material 34 already used, the number of electronic identifiers 50 remaining (and corresponding meterage of wrapping material 34 remaining).

Alternatively, the processor 52 records in the memory 70 the identity of the last electronic identifier 50 identified on a roll 32. If the roll 32 is not changed then, since serial numbers of electronic identifiers are incremental (where the electronic identifier is an RFID tag), when the baler 2 resumes use of the partially consumed roll 32 of wrapping material 34, the processor 52 can refer to the memory 70 and pick up the wrapping process where it left off without the need for the operator to enter the data.

From reading the present disclosure, other modifications will be apparent to persons skilled in the art.

## Claims

1. A control system (100) for controlling a cutting operation performed by one or more operational components of an agricultural baler (2) on a wrapping material (34) incorporating a plurality of electronic identifiers (50), the control system (100) comprising one or more controllers, and being configured to:
receive data indicative of a position of a first electronic identifier (50);
receive data indicative of the distance between adjacent electronic identifiers (50);
**characterised in that** the control system is further configured to determine, in dependence on the position of at least a first electronic identifier (50) and the distance between adjacent electronic identifiers (50), a cutting strategy for performing the cutting operation to avoid severing of the wrapping material in the region of an electronic identifier (50); and
generate and output one or more control signals for controlling one or more operational components associated with the baler (2) in dependence on the determined cutting strategy.

2. A control system as claimed in claim 1, wherein the cutting strategy comprises one of:
increasing the number of preset wrapping material layers; or
decreasing the number of preset wrapping material layers; or
neither increasing or decreasing the number of preset wrapping material layers.

3. A control system as claimed in any preceding claim, wherein the one or more operational components comprises the user interface (60) operable to communicate information indicative of the determined cutting strategy to an operator of the agricultural baler.

4. A control system as claimed in claim 3, configured to generate and output the one or more control signals for controlling operation of the user interface (60) to communicate the information indicative of the determined cutting strategy to an operator of the agricultural baler (2).

5. A control system of any preceding claim, wherein the one or more operational components further comprises a severing apparatus (42) for operation in accordance with the determined cutting strategy.

6. A control system as claimed in claim 5, configured to generate and output the one or more control signals for automatically controlling the severing apparatus (42) to sever the wrapping material (34) during a baling operation.

7. A control system as claimed in any preceding claim, configured to:
receive position data from an electronic identification system associated with the agricultural baler (2); and
determine a cutting strategy in dependence thereon.

8. A control system as claimed in claim 7, wherein the electronic identification system comprises a reader (46) of the electronic identifier.

9. A control system as claimed in claim 7 or claim 8, wherein the electronic identification system is mounted or otherwise coupled to the agricultural baler (2) and configured to monitor electronic identifiers passing into a baling chamber (6) of the agricultural baler (2).

10. A control system as claimed in any preceding claim, configured to receive a user input indicative of a position of a first electronic identifier (50) provided by an operator of the agricultural baler (2) and determine the cutting strategy in dependence thereon.

11. A system for controlling a cutting operation performed by one or more controllable components of an agricultural baler (2) on a wrapping material (34), comprising:
a severing apparatus (42) for severing wrapping materials passing into a baling chamber (6) of an agricultural baler (2); and
a control system (100) as claimed in any preceding claim configured to control operation of the severing apparatus (42) and/or the wrapping apparatus in accordance with a determined cutting strategy to avoid severing of the wrapping material in the region of an electronic identifier (50).

12. An agricultural baler (2) comprising the control system (100) of any of claims 1 to 10, or comprising the system of claim 11.

13. A method of controlling operation of one or more controllable components of an agricultural baler (2), comprising:
receiving data indicative of data indicative of a position of a first electronic identifier (50) on a wrapping material (34) incorporating a plurality of electronic identifiers (50);
determine, in dependence on the position of a first electronic identifier (50), a cutting strategy for performing a cutting operation to avoid severing of the wrapping material in the region of the electronic identifier (50); and
generate and output one or more control signals for controlling one or more operational components associated with the agricultural baler (2) in dependence on the determined cutting strategy.

14. A computer readable program comprising instructions which, when the program is executed by a computer, causes the agricultural baler (2) of claim 12 to implement the method of claim 13.

## Patentansprüche

1. Steuersystem (100) zum Steuern eines Schneidvorgangs, der durch eine oder mehrere Betriebskomponenten einer landwirtschaftlichen Ballenpresse (2) an einem Umhüllungsmaterial (34) durchgeführt wird, das mehrere elektronische Kennungen (50) beinhaltet, wobei das Steuersystem (100) eine oder mehrere Steuerungen umfasst und ausgelegt ist zum:
Empfangen von Daten, die indikativ für eine Position einer ersten elektronischen Kennung (50) sind;
Empfangen von Daten, die indikativ für den Abstand zwischen angrenzenden elektronischen Kennungen (50) sind;
**dadurch gekennzeichnet, dass** das Steuersystem ferner dazu ausgelegt ist, in Abhängigkeit von der Position mindestens einer ersten elektronischen Kennung (50) und dem Abstand zwischen angrenzenden elektronischen Kennungen (50) eine Schneidstrategie zum Durchführen des Schneidvorgangs zu bestimmen, um ein Durchtrennen des Umhüllungsmaterials in dem Bereich einer elektronischen Kennung (50) zu vermeiden; und
Erzeugen und Ausgeben eines oder mehrerer Steuersignale zum Steuern einer oder mehrerer Betriebskomponenten, die der Ballenpresse (2) zugeordnet sind, in Abhängigkeit von der bestimmten Schneidstrategie.

2. Steuersystem nach Anspruch 1, wobei die Schneidstrategie eines aus Folgendem umfasst:
Erhöhen der Anzahl voreingestellter Umhüllungsmaterialschichten; oder
Verringern der Anzahl voreingestellter Umhüllungsmaterialschichten; oder
weder eine Erhöhung noch eine Verringerung der Anzahl der voreingestellten Umhüllungsmaterialschichten.

3. Steuersystem nach einem der vorhergehenden Ansprüche, wobei die eine oder die mehreren Betriebskomponenten die Benutzerschnittstelle (60) umfassen, die betreibbar ist, um Informationen, die indikativ für die bestimmte Schneidstrategie sind, an einen Bediener der landwirtschaftlichen Ballenpresse zu kommunizieren.

4. Steuersystem nach Anspruch 3, das dazu ausgelegt ist, das eine oder die mehreren Steuersignale zum Steuern des Betriebs der Benutzerschnittstelle (60) zu erzeugen und auszugeben, um die Informationen, die indikativ für die bestimmte Schneidstrategie sind, an einen Bediener der landwirtschaftlichen Ballenpresse (2) zu übermitteln.

5. Steuersystem nach einem der vorhergehenden Ansprüche, wobei die eine oder die mehreren Betriebskomponenten ferner eine Durchtrennvorrichtung (42) zum Betrieb gemäß der bestimmten Schneidstrategie umfassen.

6. Steuersystem nach Anspruch 5, das dazu ausgelegt ist, das eine oder die mehreren Steuersignale zum automatischen Steuern der Durchtrennvorrichtung (42) zu erzeugen und auszugeben, um das Umhüllungsmaterial (34) während eines Ballenpressvorgangs zu durchtrennen.

7. Steuersystem nach einem der vorhergehenden Ansprüche, das ausgelegt ist zum:
Empfangen von Positionsdaten von einem elektronischen Identifikationssystem, das mit der landwirtschaftlichen Ballenpresse (2) assoziiert ist; und
Bestimmen einer Schneidstrategie in Abhängigkeit davon.

8. Steuersystem nach Anspruch 7, wobei das elektronische Identifikationssystem ein Lesegerät (46) der elektronischen Kennung umfasst.

9. Steuersystem nach Anspruch 7 oder Anspruch 8, wobei das elektronische Identifikationssystem an der landwirtschaftlichen Ballenpresse (2) montiert oder anderweitig gekoppelt ist und ausgelegt ist zum Überwachen elektronischer Kennungen, die in eine Ballenpresskammer (6) der landwirtschaftlichen Ballenpresse (2) gelangen.

10. Steuersystem nach einem der vorhergehenden Ansprüche, das dazu ausgelegt ist, eine Benutzereingabe zu empfangen, die indikativ für eine Position einer ersten elektronischen Kennung (50) ist, die von einem Bediener der landwirtschaftlichen Ballenpresse (2) bereitgestellt wird, und die Schneidstrategie in Abhängigkeit davon zu bestimmen.

11. System zum Steuern eines Schneidvorgangs, der durch eine oder mehrere steuerbare Komponenten einer landwirtschaftlichen Ballenpresse (2) auf einem Umhüllungsmaterial (34) durchgeführt wird, umfassend:
eine Durchtrennvorrichtung (42) zum Durchtrennen von Umhüllungsmaterialien, die in eine Ballenpresskammer (6) einer landwirtschaftlichen Ballenpresse (2) gelangen; und
Steuersystem (100) nach einem der vorhergehenden Ansprüche, das dazu ausgelegt ist, den Betrieb der Durchtrennvorrichtung (42) und/oder der Umhüllungsvorrichtung gemäß einer bestimmten Schneidstrategie zu steuern, um ein Durchtrennen des Umhüllungsmaterials im Bereich einer elektronischen Kennung (50) zu vermeiden.

12. Landwirtschaftliche Ballenpresse (2), die das Steuersystem (100) nach einem der Ansprüche 1 bis 10 umfasst oder das System nach Anspruch 11 umfasst.

13. Verfahren zum Steuern des Betriebs einer oder mehrerer steuerbarer Komponenten einer landwirtschaftlichen Ballenpresse (2), umfassend:
Empfangen von Daten, die indikativ für Daten sind, die indikativ für eine Position einer ersten elektronischen Kennung (50) auf einem Umhüllungsmaterial (34) sind, das mehrere elektronische Kennungen (50) beinhaltet;
Bestimmen, in Abhängigkeit von der Position einer ersten elektronischen Kennung (50), einer Schneidstrategie zum Durchführen eines Schneidvorgangs, um ein Durchtrennen des Umhüllungsmaterials in dem Bereich der elektronischen Kennung (50) zu vermeiden; und
Erzeugen und Ausgeben eines oder mehrerer Steuersignale zum Steuern einer oder mehrerer Betriebskomponenten, die der landwirtschaftlichen Ballenpresse (2) zugeordnet sind, in Abhängigkeit von der bestimmten Schneidstrategie.

14. Computerlesbares Programm, das Anweisungen umfasst, die, wenn das Programm durch einen Computer ausgeführt wird, die landwirtschaftliche Ballenpresse (2) nach Anspruch 12 veranlassen, das Verfahren nach Anspruch 13 zu implementieren.

## Revendications

1. Système de commande (100) pour commander une opération de coupe réalisée par un ou plusieurs composants opérationnels d'une presse à balles agricole (2) sur un matériau d'emballage (34) incorporant une pluralité d'identifiants électroniques (50), le système de commande (100) comprenant un ou plusieurs dispositifs de commande, et étant configuré pour :
recevoir des données indicatives d'une position d'un premier identifiant électronique (50) ;
recevoir des données indicatives de la distance entre des identifiants électroniques (50) adjacents ;
**caractérisé en ce que** le système de commande est en outre configuré pour déterminer, en fonction de la position d'au moins un premier identifiant électronique (50) et de la distance entre des identifiants électroniques (50) adjacents, une stratégie de coupe pour réaliser l'opération de coupe pour éviter un sectionnement du matériau d'emballage dans la région d'un identifiant électronique (50) ; et
générer et fournir en sortie un ou plusieurs signaux de commande pour commander un ou plusieurs composants opérationnels associés à la presse à balles (2) en fonction de la stratégie de coupe déterminée.

2. Système de commande selon la revendication 1, dans lequel la stratégie de coupe comprend un élément parmi :
l'augmentation du nombre de couches de matériau d'emballage prédéfinies ; ou
la diminution du nombre de couches de matériau d'emballage prédéfinies ; ou
ni l'augmentation ni la diminution du nombre de couches de matériau d'emballage prédéfinies.

3. Système de commande selon l'une quelconque des revendications précédentes, dans lequel les un ou plusieurs composants opérationnels comprennent l'interface utilisateur (60) utilisable pour communiquer des informations indicatives de la stratégie de coupe déterminée à un opérateur de la presse à balles agricole.

4. Système de commande selon la revendication 3, configuré pour générer et fournir en sortie les un ou plusieurs signaux de commande pour commander le fonctionnement de l'interface utilisateur (60) pour communiquer les informations indicatives de la stratégie de coupe déterminée à un opérateur de la presse à balles agricole (2).

5. Système de commande selon l'une quelconque des revendications précédentes, dans lequel les un ou plusieurs composants opérationnels comprennent en outre un appareil de sectionnement (42) pour un fonctionnement conformément à la stratégie de coupe déterminée.

6. Système de commande selon la revendication 5, configuré pour générer et fournir en sortie les un ou plusieurs signaux de commande pour commander automatiquement l'appareil de sectionnement (42) pour sectionner le matériau d'emballage (34) pendant une opération de mise en balles.

7. Système de commande selon l'une quelconque des revendications précédentes, configuré pour :
recevoir des données de position d'un système d'identification électronique associé à la presse à balles agricole (2) ; et
déterminer une stratégie de coupe en fonction de celle-ci.

8. Système de commande selon la revendication 7, dans lequel le système d'identification électronique comprend un lecteur (46) de l'identifiant électronique.

9. Système de commande selon la revendication 7 ou la revendication 8, dans lequel le système d'identification électronique est monté sur ou autrement couplé à la presse à balles agricole (2) et configuré pour surveiller les identifiants électroniques passant dans une chambre de mise en balles (6) de la presse à balles agricole (2).

10. Système de commande selon l'une quelconque des revendications précédentes, configuré pour recevoir une entrée d'utilisateur indicative d'une position d'un premier identifiant électronique (50) fourni par un opérateur de la presse à balles agricole (2) et déterminer la stratégie de coupe en fonction de celle-ci.

11. Système de commande d'une opération de coupe réalisée par un ou plusieurs composants pouvant être commandés d'une presse à balles agricole (2) sur un matériau d'emballage (34), comprenant :
un appareil de sectionnement (42) pour sectionner des matériaux d'emballage passant dans une chambre de mise en balles (6) d'une presse à balles agricole (2) ; et
un système de commande (100) selon l'une quelconque des revendications précédentes configuré pour commander le fonctionnement de l'appareil de sectionnement (42) et/ou de l'appareil d'emballage conformément à une stratégie de coupe déterminée pour éviter le sectionnement du matériau d'emballage dans la région d'un identifiant électronique (50).

12. Presse à balles agricole (2) comprenant le système de commande (100) selon l'une quelconque des revendications 1 à 10, ou comprenant le système selon la revendication 11.

13. Procédé pour commander le fonctionnement d'un ou de plusieurs composants pouvant être commandés d'une presse à balles agricole (2), comprenant :
la réception de données indicatives de données indicatives d'une position d'un premier identifiant électronique (50) sur un matériau d'emballage (34) incorporant une pluralité d'identifiants électroniques (50) ;
la détermination, en fonction de la position d'un premier identifiant électronique (50), d'une stratégie de coupe pour réaliser une opération de coupe pour éviter le sectionnement du matériau d'emballage dans la région de l'identifiant électronique (50) ; et
la génération et la fourniture en sortie d'un ou de plusieurs signaux de commande pour commander un ou plusieurs composants opérationnels associés à la presse à balles agricole (2) en fonction de la stratégie de coupe déterminée.

14. Programme lisible par ordinateur comprenant des instructions qui, lorsque le programme est exécuté par un ordinateur, amènent la presse à balles agricole (2) selon la revendication 12 à mettre en œuvre le procédé selon la revendication 13.
